# FASCICULE DE BREVET EUROPEEN

(11) **EP 1 207 442 B1**
(45) Date de publication et mention de la délivrance du brevet: **21.04.2004**
(21) Numéro de dépôt: 01410153.9
(22) Date de dépôt: 16.11.2001
(51) Int. Cl.: G05B 19/042, G05B 19/05

(54) **Dispositif électrique programmable**
Elektrische programmierbare Vorrichtung
Electrical programmable device

(30) Priorité: 20.11.2000 FR 0014930
(43) Date de publication de la demande: 22.05.2002
(73) Titulaire: Schneider Electric Industries SAS, 92500 Rueil-Malmaison (FR)
(72) Inventeur: Carle, Philippe, Schneider Electric Industries SA, 38050 Grenoble cédex 09 (FR); Dupard, Fabienne, Schneider Electric Industries SA, 38050 Grenoble cédex 09 (FR)
(74) Mandataire: Tripodi, Paul

(56) Documents cités:
- EP-A- 0 899 670
- DE-A- 4 212 370
- DE-A- 4 410 478
- DE-A- 19 513 230
- ZILKER M: "TABELLENGESTEUERTE ECHTZEITVERARBEITUNG" ELEKTRONIK, FRANZIS VERLAG GMBH. MUNCHEN, DE, vol. 38, no. 3, 3 février 1989 (1989-02-03), pages 56-58, XP000031870 ISSN: 0013-5658

## Description

L'invention concerne un dispositif électrique programmable comportant une unité de traitement, au moins une sortie connectée à l'unité de traitement, des moyens de visualisation connectés à l'unité de traitement, des moyens de sélection connectés à l'unité de traitement, et des moyens de mémorisation associés à l'unité de traitement.

Les dispositifs électriques programmables connus tels que des automates programmables de tableaux électriques industriels, décrits notamment dans des documents DE4212370 et DE19513230, nécessitent un langage de programmation élaboré. Ce langage de programmation est généralement basé sur des fonctions logiques qui sont écrites lignes par lignes ou appelées de manière graphique. Ces fonctions logiques permettent de déterminer la valeur d'une sortie en fonction de l'état d'une ou de plusieurs entrées.

Un langage de programmation de type connu n'est pas facilement accessible ou utilisable par des installateurs ou des utilisateurs habitués à des installations classiques où des fonctions sont réalisées par des appareils électriques disposés dans des tableaux. Cependant, les appareils électriques ne sont pas programmables, ils ne permettent pas une évolution facile d'une installation électrique.

L'invention a pour but un dispositif électrique programmable pouvant être facilement utilisé et ne nécessitant pas de langage de programmation complexe.

Dans un dispositif électrique programmable selon l'invention, l'unité de traitement comporte des moyens d'attribution pour attribuer à au moins une sortie au moins une fonction sélectionnée parmi des fonctions d'appareillage électrique de commande prédéfinies telle qu'une fonction de minuterie, d'horloge, ou de compteur et pour attribuer à ladite fonction d'appareillage électrique sélectionnée au moins une valeur de paramètres de fonctionnement sélectionnée parmi des valeurs de paramètres prédéfinies.

Dans un mode de réalisation préférentiel, au moins une entrée est connectée à l'unité de traitement, et au moins une sortie est dépendante d'au moins une fonction d'appareillage électrique de commande prédéfinie utilisant l'état de ladite au moins une entrée.

De préférence, au moins une fonction d'appareillage électrique de commande est une fonction de minuterie, ou une fonction de relais temporisé, ou une fonction de compteur, ou une fonction de décompteur déclenché par un changement l'état de la dite entrée.

De préférence, au moins une fonction d'appareillage électrique de commande est une fonction d'horloge, ou une fonction d'interrupteur horaire ou une fonction de clignotant.

Avantageusement, les moyens d'attribution permettent d'attribuer à une sortie au moins deux fonctions d'appareillage électrique de commande prédéfinies différentes.

Avantageusement, les moyens de visualisation ont un mode de fonctionnement affichant les états d'un ensemble de sorties.

Un procédé de sélection d'une phase d'attribution d'une unité de traitement d'un dispositif tel que défini ci-dessus comporte :
- une étape de sélection d'une sortie,
- une étape de sélection d'une première fonction d'appareillage électrique de commande telle qu'une fonction de minuterie, d'horloge, ou de compteur à attribuer à ladite sortie, et
- une étape de validation ou de mémorisation.

Avantageusement, le procédé comporte une étape de sélection de paramètres de fonctionnement de ladite première fonction.

De préférence, le procédé comporte une étape de sélection d'une entrée à attribuer à ladite première fonction.

Avantageusement, le procédé comporte une étape de sélection d'une seconde fonction d'appareillage électrique de commande à attribuer à ladite sortie.

De préférence, les moyens de visualisation ont un mode de fonctionnement affichant les états d'un ensemble de sorties.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif électrique programmable ;
- la figure 2 représente un boîtier modulaire comportant un dispositif électrique programmable ;
- la figure 3 représente un organigramme de fonctionnement d'un dispositif électrique programmable ;
- la figure 4 représente un premier organigramme d'attribution de fonctions d'un dispositif électrique programmable selon un mode de réalisation l'invention ;
- la figure 5 représente un second organigramme d'attribution de fonctions d'un dispositif électrique programmable selon un mode de réalisation l'invention ;
- la figure 6 représente un organigramme de sélection de paramètres d'une fonction minuterie d'un dispositif électrique programmable selon un mode de réalisation l'invention ;
- la figure 7 représente un organigramme de sélection de paramètres d'une horloge d'un dispositif électrique programmable selon un mode de réalisation l'invention.

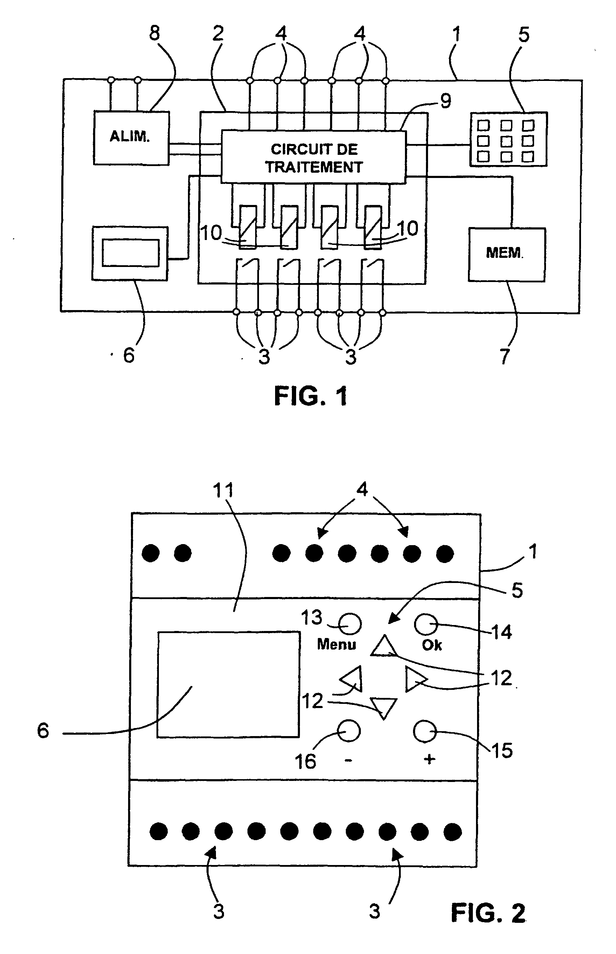

Un dispositif électrique programmable 1 représenté sur la figure 1 comporte une unité de traitement 2, des sorties 3 connectées à l'unité de traitement, des entrées 4 connectées à l'unité de traitement, des moyens de sélection 5 tels que des touches de boutons poussoir ou d'un clavier connectés à l'unité de traitement, des moyens de visualisation 6 tel qu'un afficheur connectées à l'unité de traitement, des moyens de mémorisation 7 associés à l'unité de traitement, et un circuit d'alimentation 8 pour alimenter notamment l'unité de traitement et les moyens d'affichage. L'unité de traitement comporte un circuit électronique de traitement 9 pour contrôler des relais 10 ayant des contacts de sortie connectés aux sorties 3.

L'unité de traitement comporte des moyens d'attribution pour attribuer à au moins une sortie 3 au moins une fonction sélectionnée parmi des fonctions d'appareillage électrique de commande prédéfinies et pour attribuer à ladite fonction d'appareillage électrique sélectionnée au moins une valeur de paramètres de fonctionnement sélectionnée parmi des valeurs de paramètre prédéfinies. Par exemple si une fonction nécessite une entrée, une ladite fonction utilise l'état de ladite entrée pour déterminer l'état de ladite sortie.

Une fonction d'appareillage électrique de commande peut être, notamment, une fonction d'horloge, ou une fonction d'interrupteur horaire, ou une fonction de clignotant, ou une fonction de minuterie, ou une fonction de relais temporisé, ou une fonction de compteur, ou une fonction de décompteur, Certaines fonctions peuvent être déclenchées par un changement l'état d'une entrée.

Une ou plusieurs fonctions d'appareillage électrique de commande prédéfinies différentes peuvent être attribuées à une sortie.

La figure 2 représente un dispositif selon la figure 1 disposé dans un boîtier modulaire. Les entées 4 sont disposées sur la partie supérieure et les sorties 3 sont disposées sur la partie inférieure du boîtier. Une face avant 11 dudit boîtier comprend un afficheur 6, de préférence du type à cristaux liquides, et des touches des moyens de sélection 5. Avantageusement, quatre touches 12 permettent de commander le défilement de listes de fonctions et de paramètres prédéfinis, deux touches 15 et 16 permettent de commander le changement de valeurs de paramètres prédéfinies, une touche 13 permet de commander l'affichage d'un menu d'installation ou programmation, et une touche 14 permet de valider l'attribution de fonctions de valeurs de paramètres et/ou de changement de valeurs.

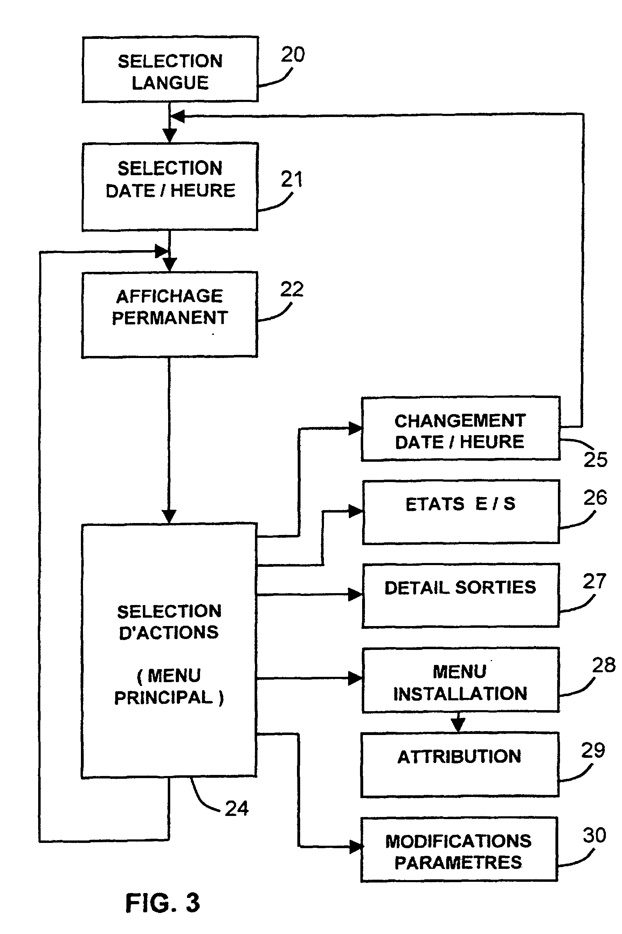

L'organigramme de la figure 3 comporte une étape 20 de sélection de langue d'affichage et une étape 21 de sélection de la date et de l'heure. Ces deux premières étapes peuvent être nécessaires lors de la première mise en service du dispositif électrique programmable. Ensuite, une étape 22 d'affichage permanent permet d'afficher, par exemple, la date et heure ou l'état des entrées et des sorties selon le mode d'affichage permanent par défaut ou le mode d'affichage choisi notamment dans une étape préalable.

Une étape 24 de sélection d'actions permet d'afficher un menu pour choisir des actions, notamment à la suite d'une commande de la touche 13. Un menu déroulant pendant l'étape 24 permet notamment de choisir une étape 25 de changement de date ou heure qui renvoie par exemple à l'étape 21, une étape 26 pour afficher en permanence les états des entrées et/ou des sorties, une étape 27 pour afficher le détail des sorties. Dans l'étape 26, il est possible de sélectionner une sortie est d'afficher ensuite des détails des fonctions associées à ladite sortie. L'étape 24 permet aussi de choisir une étape 28 pour accéder à un menu d'installation et une phase 29 d'attribution de fonctions à des sorties selon un mode réalisation de l'invention. Dans un mode réalisation particulier, l'étape 24 peut aussi orienter vers une phase 30 de modification de paramètres de manières à modifier directement des valeurs de paramètres pouvant être variables et librement accessibles.

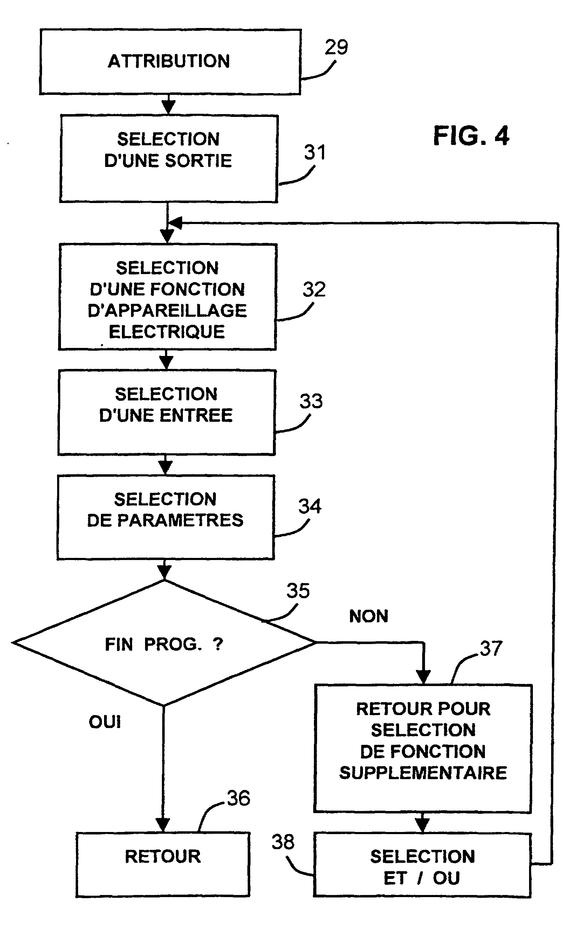

Un organigramme d'une phase d'attribution est représenté sur la figure 4. Dans cette phase d'attribution, une sortie est sélectionnée à une étape 31 de sélection d'une sortie. Puis, à une étape 32 de sélection de fonctions, une fonction est attribuée à ladite sortie. Ensuite, si la fonction sélectionnée le nécessite, une entrée est attribuée à ladite fonction à une étape 33. Une étape 34 permet de sélectionnée des paramètres associés à la fonction choisie. Lorsque l'attribution d'une fonction à une sortie est terminée, une étape 35 permet de sortir de l'attribution de fonction à une sortie vers une étape 36 de retour ou de retourner à l'attribution de fonction pour sélectionner une fonction supplémentaire à une étape 37. Avant de commencer, une attribution supplémentaire, une étape 38 permet de choisir un opérateur logique entre les fonctions pour commander la sortie sélectionnée. Les étapes 36 et 37 sont aussi des étapes de validation et de mémorisation permettant de stocker en mémoire les fonctions attribuées aux sorties.

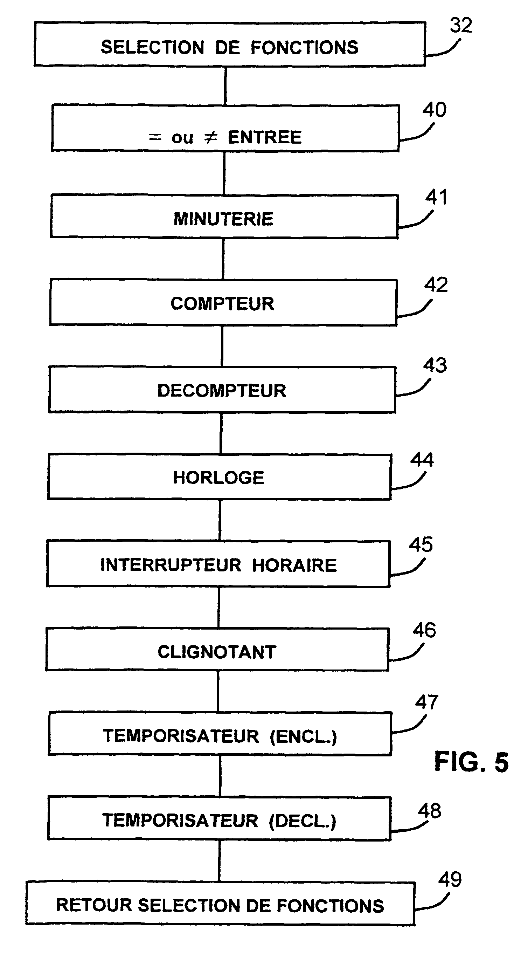

L'étape 32 de sélection de fonction d'appareillage électrique peut être réalisée par un menu déroulant. Un exemple de menu déroulant de sélection de fonction d'appareillage électrique de commande est représenté par un organigramme sur la figure 5. Cet organigramme peut comporter notamment :
- une étape 40 pour attribuer une fonction où la sortie est représentative de l'état d'une entrée ou de son inverse,
- une étape 41 pour attribuer une fonction minuterie pouvant être déclenchée par l'état ou le changement d'état d'une entrée,
- une étape 42 pour attribuer une fonction compteur pour compter des changements d'état d'une entrée et faire changer d'état d'une sortie si une valeur de seuil correspondant à un nombre prédéterminé est dépassée,
- une étape 43 pour attribuer une fonction décompteur pour décompter des changements d'état d'une entrée et faire changer d'état d'une sortie si une valeur de seuil correspondant à un nombre prédéterminé est atteinte,
- une étape 44 ou une étape 45 pour attribuer une fonction horloge ou une fonction interrupteur horaire pour commander une sortie en fonction d'au moins une plage horaire prédéterminée, pour certaines plages horaires ladite sortie sélectionnée pouvant aussi être dépendante de l'état d'une entrée,
- une étape 46 pour attribuer une fonction clignotant pour activer et désactiver une sortie en fonction d'un cycle et d'une période prédéterminés, ou
- une étape 47 ou une étape 48 pour attribuer une fonction temporisateur pouvant être déclenché à l'enclenchement ou au déclenchement d'une entrée pour retarder la commande d'une sortie sélectionnée. Une fonction temporisateur peut aussi être appelée fonction de relais temporisé.

Dans les étapes 44 ou 45, les plages de fonctionnement peuvent être notamment journalières, hebdomadaires et/ou annuelles.

A la fin de l'attribution d'une fonction d'appareillage électrique de commande, une étape 49 de retour de sélection de fonction permet de sortir de ce menu déroulant et de passer à un menu suivant qui consiste à sélectionner notamment une entrée ou des paramètres de fonctionnement. Cette étape permet aussi de valide ou de mémoriser la fonction attribuée à la sortie.

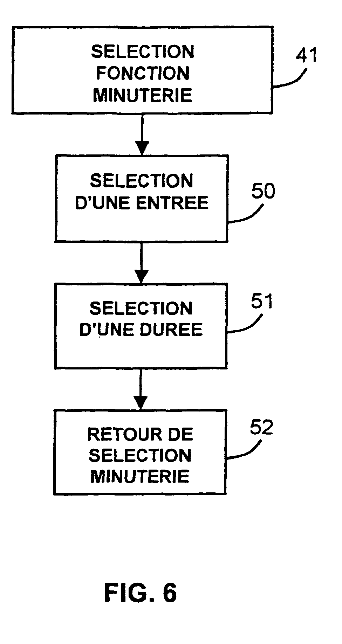

La figure 6 montre un organigramme de sélection de paramètres d'une fonction minuterie d'un dispositif électrique programmable. Après avoir valider la fonction minuterie, à l'étape 41, un menu permet de choisir une entrée lors d'une étape 50. Ensuite, à une étape 51, un menu permet de choisir une valeur de temporisation ou une valeur de la durée de commande de la sortie sélectionnée suite à une commande sur l'entrée sélectionnée. Lorsque les sélections d'entrée et de paramètre durée sont réalisés, une étape 52 permet de sortir du menu de sélection de fonction minuterie.

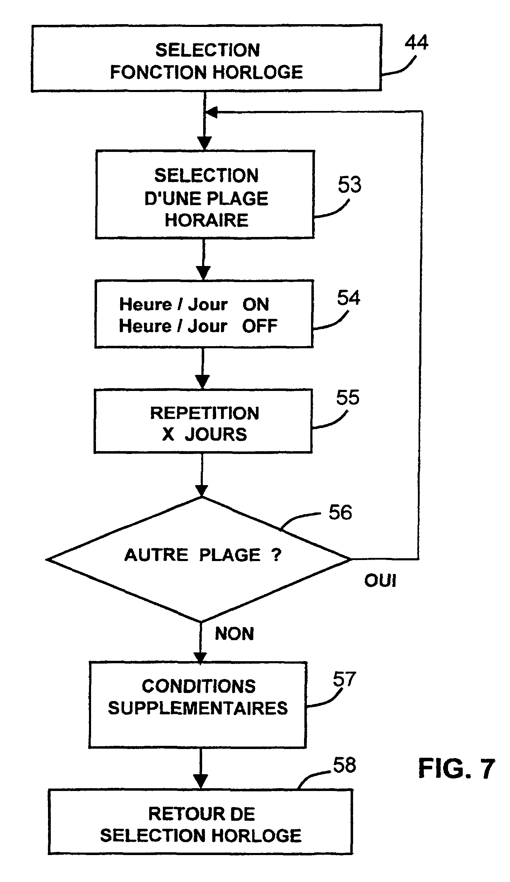

La figure 7 représente un organigramme de sélection de paramètres d'une fonction horloge ou interrupteur horaire d'un dispositif électrique programmable. Après avoir valider la fonction horloge à l'étape 44, un menu permet de choisir une plage de fonctionnement lors d'une étape 53. Une heure et un jour de début et une heure et un jour de fin de l'actionnement d'une sortie sont attribués à cette plage de fonctionnement à une étape 54. Si le jour de début et de fin sont identiques, une étape 55 permet de répéter les heures de début et de fin sur plusieurs jours. Dans la fonction horloge, plusieurs plages de fonctionnement peuvent être attribuées. Ainsi, une étape 56 permet de revenir à l'étape 53 pour définir une nouvelle plage horaire. Une étape 57 permet d'attribuer des conditions supplémentaires par exemple l'état d'une entrée pour commander la sortie sélectionnée. A la fin de la sélection de plages horaire, une étape 58 permet de valider et de sortir de la sélection de la fonction horloge.

Plusieurs paramètres peuvent être changer lors d'une phase 30 de modification. Cette phase permet d'accéder directement aux paramètres modifiables sans passer par la phase d'attribution 29. Parmi les paramètres modifiable il peut y avoir les durées de temporisation des relais temporisés ou des fonction s minuterie, les plages horaires des interrupteurs horaires, ou des seuils des compteurs ou des décompteurs.

Le dispositif décrit ci-dessus et représenté sur les figures 1 et 2, comporte quatre sorties et six entrées, cependant dans d'autres modes de réalisation dispositifs selon l'invention des nombres différents d'entrées et de sorties peuvent être prévus. Les entrées peuvent être logiques ou analogiques.

Les sorties peuvent aussi être des contacts inverseurs à trois bornes avec un commun, un contact repos et un contact travail.

Le boîtier du dispositif est de préférence modulaire mais d'autres boîtiers peuvent aussi convenir.

Certains dispositifs peuvent aussi comporter un dispositif de communication pour communiquer avec une centrale distante. Dans ce cas, les états des sorties est des entrées peuvent être reportées ainsi que l'attributions des fonctions et des paramètres.

## Revendications

1. Dispositif électrique programmable comportant :
- une unité de traitement (2),
- au moins une sortie (3) connectée à l'unité de traitement,
- des moyens (6) de visualisation connectés à l'unité de traitement,
- des moyens (5, 12-16) de sélection connectés à l'unité de traitement, et
- des moyens (7) de mémorisation associés à l'unité de traitement,
dispositif **caractérisé en ce que** l'unité de traitement (2) comporte des moyens (29, 31-34) d'attribution pour attribuer à au moins une sortie (3, 31) au moins une fonction (32) sélectionnée parmi des fonctions d'appareillage électrique de commande prédéfinies (40-49) telle qu'une fonction de minuterie, d'horloge, ou de compteur et pour attribuer à ladite fonction d'appareillage électrique sélectionnée au moins une valeur de paramètres (34) de fonctionnement sélectionnée parmi des valeurs de paramètres prédéfinies.

2. Dispositif selon la revendication 1 **caractérisé en ce qu'**il comporte au moins une entrée (4) connectée à l'unité de traitement (2), et **en ce qu'**au moins une sortie (3) est dépendante d'au moins une fonction (40-49) d'appareillage électrique de commande prédéfinie utilisant l'état de ladite au moins une entrée (4).

3. Dispositif selon la revendication 2 **caractérisé en ce qu'**au moins une fonction d'appareillage électrique de commande (32, 40-49) est une fonction de minuterie (41), ou une fonction de relais temporisé (47, 48), ou une fonction de compteur (42), ou une fonction de décompteur (43) déclenché par un changement l'état de la dite entrée.

4. Dispositif selon l'une quelconque des revendications 1 à 3 **caractérisé en ce qu'**au moins une fonction d'appareillage électrique de commande (32, 40-49) est une fonction d'horloge (44), ou une fonction d'interrupteur horaire (45) ou une fonction de clignotant (46).

5. Dispositif selon l'une quelconque des revendications 1 à 4 **caractérisé en ce que** les moyens d'attribution (29, 31-35, 37, 38) permettent d'attribuer à une sortie (3) au moins deux fonctions d'appareillage électrique de commande prédéfinies différentes (40-48).

6. Dispositif selon l'une quelconque des revendications 1 à 5 **caractérisé en ce que** les moyens de visualisation (6, 26, 27) ont un mode de fonctionnement affichant les états d'un ensemble de sorties (3).

7. Procédé de sélection d'une phase d'attribution (29) d'une unité de traitement d'un dispositif selon l'une quelconque des revendications 1 à 6 **caractérisé en ce qu'**il comporte :
- une étape (31) de sélection d'une sortie (4),
- une étape (32) de sélection d'une première fonction d'appareillage électrique de commande (40-48) telle qu'une fonction de minuterie, d'horloge, ou de compteur à attribuer à ladite sortie (4), et
- une étape (36, 37, 49, 58) de validation ou de mémorisation.

8. Procédé selon la revendication 7 **caractérisé en ce qu'**il comporte une étape (34, 51, 54-57) de sélection de paramètres de fonctionnement de ladite première fonction.

9. Procédé selon l'une des revendications 7 ou 8 **caractérisé en ce qu'**il comporte une étape (33, 50) de sélection d'une entrée à attribuer à ladite première fonction.

10. Procédé selon l'une quelconque des revendications 7 à 9 **caractérisé en ce qu'**il comporte une étape (37, 38, 32) de sélection d'une seconde fonction d'appareillage électrique de commande à attribuer à ladite sortie.

## Claims

1. Programmable electrical device comprising:
- a processing unit (2),
- at least one output (3) connected to the processing unit,
- display means (6) connected to the processing unit,
- selection means (5, 12-16) connected to the processing unit, and
- storage means (7) associated to the processing unit,
device **characterized in that** the processing unit (2) comprises assignment means (29, 31-34) to assign to at least one output (3, 31) at least one function (32) selected from predefined electrical control apparatus functions (40-49) such as a time switch, clock or counter function and to assign to said selected electrical control apparatus function at least one value of operating settings (34) selected from predefined setting values.

2. Device according to claim 1 **characterized in that** it comprises at least one input (4) connected to the processing unit (2), and that at least one output (3) is dependent on at least one predefined electrical control apparatus function (40-49) using the state of said at least one input (4).

3. Device according to claim 2 **characterized in that** at least one electrical control apparatus function (32, 40-49) is a time switch function (41), or a delayed action relay function (47, 48), or a counter function (42), or a countdown function (43) triggered by a change of state of said input.

4. Device according to any one of the claims 1 to 3 **characterized in that** at least one electrical control apparatus function (32, 40-49) is a clock function (44), or a timer function (45) or a flashing indicator function (46).

5. Device according to any one of the claims 1 to 4 **characterized in that** the assignment means (29, 31-35, 37, 38) enable at least two different predefined electrical control apparatus functions (40-48) to be assigned to an output (3).

6. Device according to any one of the claims 1 to 5 **characterized in that** the display means (6, 26, 27) have an operating mode displaying the states of a set of outputs (3).

7. Selection process of an assignment phase (29) of a processing unit of a device according to any one of the claims 1 to 6 **characterized in that** it comprises:
- a selection step (31) of an output (3),
- a selection step (32) of a first electrical control apparatus function (40-48) such as a time switch, clock or counter function to be assigned to said output (3), and
- a validation or storage step (36, 37, 49, 58).

8. Process according to claim 7 **characterized in that** it comprises a selection step (34, 51, 54-57) of operating settings of said first function.

9. Process according to one of the claims 7 or 8 **characterized in** it comprises a selection step (33, 50) of an input to be assigned to said first function.

10. Process according to any one of the claims 7 to 9 **characterized in that** it comprises a selection step (37, 38, 32) of a second electrical control apparatus function to be assigned to said output.

## Patentansprüche

1. Programmierbare elektrische Einrichtung mit
- einer Verarbeitungseinheit (2),
- mindestens einem mit der Verarbeitungseinheit verbundenen Ausgang (3),
- mit der Verarbeitungseinheit verbundenen Anzeigemitteln (6),
- mit der Verarbeitungseinheit verbundenen Auswahlmitteln (5, 12-16) sowie
- der Verarbeitungseinheit zugeordneten Speichermitteln (7),
**dadurch gekennzeichnet, daß** die Verarbeitungseinheit (2) Zuweisungsmittel (29, 31-34) umfaßt, die dazu dienen, mindestens einem Ausgang (3, 31) mindestens eine, aus vordefinierten elektrischen Steuergerätefunktionen (40-49) ausgewählte Funktion (32), wie z.B. eine Zeitschalterfunktion, eine Uhrzeitfunktion oder eine Aufwärtszählerfunktion zuzuweisen und der genannten ausgewählten elektrischen Steuergerätefunktion mindestens einen, aus vordefinierten Parameterwerten ausgewählten Betriebsparameterwert (34) zuzuweisen.

2. Einrichtung nach Anspruch 1, **dadurch gekennzeichnet, daß** sie mindestens einen mit der Verarbeitungseinheit (2) verbundenen Eingang (4) umfaßt und daß mindestens ein Ausgang (3) von mindestens einer vordefinierten elektrischen Steuergerätefunktion (40-49) abhängt, die den Signalzustand des genannten mindestens vorhandenen Eingangs (4) benutzt.

3. Einrichtung nach Anspruch 2, **dadurch gekennzeichnet, daß** mindestens eine elektrische Steuergerätefunktion (32, 40-49) eine Zeitschalterfunktion (41) oder eine Zeitverzögerungsrelaisfunktion (47, 48) oder eine Aufwärtszählerfunktion (42) oder eine Abwärtszählerfunktion (43) ist, die durch einen Signalzustandswechsel des genannten Eingangs aktiviert werden.

4. Einrichtung nach irgendeinem der Ansprüche 1 bis 3, **dadurch gekennzeichnet, daß** mindestens eine elektrische Steuergerätefunktion (32, 40-49) eine Uhrzeitfunktion (44) oder eine Schaltuhrfunktion (45) oder eine Blinkfunktion (46) ist.

5. Einrichtung nach irgendeinem der Ansprüche 1 bis 4, **dadurch gekennzeichnet, daß** es die Zuweisungsmittel (29, 31-35, 37, 38) erlauben, einem Ausgang (3) mindestens zwei unterschiedliche vordefinierte elektrische Steuergerätefunktionen (40-48) zuzuweisen.

6. Einrichtung nach irgendeinem der Ansprüche 1 bis 5, **dadurch gekennzeichnet, daß** die Anzeigemittel (6, 26, 27) einen Anzeigemodus umfassen, in dem die Signalzustände einer Gruppe von Ausgängen (3) angezeigt werden.

7. Verfahren zur Auswahl einer Zuweisungsphase (29) einer Verarbeitungseinheit einer Einrichtung nach irgendeinem der Ansprüche 1 bis 6, **dadurch gekennzeichnet, daß** es
- einen Schritt (31) zur Auswahl eines Ausgangs (4),
- einen Schritt zur Auswahl einer ersten elektrischen Steuergerätefunktion (40, 48), wie z.B. einer Zeitschalterfunktion, einer Uhrzeitfunktion oder einer Aufwärtszählerfunktion, die dem genannten Ausgang (4) zugewiesen werden soll, sowie
- einen Schritt (36, 37, 49, 58) zur Freigabe bzw. Speicherung umfaßt.

8. Verfahren nach Anspruch 7, **dadurch gekennzeichnet, daß** es einen Schritt (34, 51, 54-57) zur Auswahl von Betriebsparametern für die genannte erste Funktion umfaßt.

9. Verfahren nach einem der Ansprüche 7 oder 8, **dadurch gekennzeichnet, daß** es einen Schritt (33, 50) zur Auswahl eines Eingangs umfaßt, der der genannten ersten Funktion zugewiesen werden soll.

10. Verfahren nach irgendeinem der Ansprüche 7 bis 9, **dadurch gekennzeichnet, daß** es einen Schritt (37, 38, 32) zur Auswahl einer zweiten elektrischen Steuergerätefunktion umfaßt, die dem genannten Ausgang zugewiesen werden soll.
